# FASCICULE DE BREVET EUROPEEN

(11) **EP 1 330 741 B1**
(45) Date de publication et mention de la délivrance du brevet: **21.09.2005**
(21) Numéro de dépôt: 01983634.5
(22) Date de dépôt: 26.10.2001
(51) Int. Cl.: G06F 17/30

(54) **ANNUAIRE PERSONNEL INTERACTIF**
INTERAKTIVES PERSÖNLICHES TELEFONBUCH
INTERACTIVE PERSONAL DIRECTORY

(30) Priorité: 27.10.2000 FR 0013856
(43) Date de publication de la demande: 30.07.2003
(73) Titulaire: Brexel, Catherine, 92190 Meudon (FR); Vivensang, Nathalie, 92250 La Garenne-Colombes (FR)
(72) Inventeur: Brexel, Catherine, 92190 Meudon (FR); Vivensang, Nathalie, 92250 La Garenne-Colombes (FR)
(74) Mandataire: Breese, Pierre
(86) Numéro de dépôt international: PCT/FR2001/003326
(87) Numéro de publication internationale: WO 2002/035386

(56) Documents cités:
- EP-A2- 1 030 247
- WO-A1-00/55741
- KELLER R M ET AL: "A bookmarking service for organizing and sharing URLs" COMPUTER NETWORKS AND ISDN SYSTEMS, NORTH HOLLAND PUBLISHING. AMSTERDAM, NL, vol. 29, no. 8-13, 1 septembre 1997 (1997-09-01), pages 1103-1114, XP004095308 ISSN: 0169-7552

## Description

La présente invention concerne un annuaire personnel interactif constitué sous la forme de pages numériques transmises par un serveur à un poste client connecté au réseau Internet ou à un réseau de télécommunication.

On connaît dans l'état de la technique différents brevets portant sur des procédés de génération de pages d'annuaires.

A titre d'exemple, la demande de brevet PCT WO 00/55741 se rapporte à un système et à un procédé de gestion et de classification de liens du réseau Internet (également appelés URL, ou localisateur de ressources universel) qui permettent de créer des répertoires publics et personnels de ces liens dans le but d'améliorer la navigabilité sur le réseau Internet. Dans diverses réalisations, le système de l'art antérieur stocke des liens du Web pour de multiples utilisateurs dans une base de données et fournit des procédés d'extraction et d'affichage de ces liens du Web, des procédés de recherche des liens du Web qui sont reliés à des liens existants qu'un utilisateur a stocké dans le système, ainsi que d'autres caractéristiques associées. Les utilisateurs peuvent organiser et gérer des collections de liens et rechercher des liens connexes dans des collections de liens d'autres utilisateurs. La caractéristique de mise en correspondance de bases de données peut utiliser d'autres informations pour rechercher des relations, telles que des informations de profils relatives à l'utilisateur et comprenant, par exemple, l'âge, le sexe et le type d'activité professionnelle.

L'article « *A bookmarking service for organizing and sharing URLs* » (KELLER R M ET AL) paru dans « Computer Networks and ISDN systems » North Holland Publishing, Amsterdam Vol. 29 N° 8-13 du 1^{er} septembre 1997 décrit une autre solution permettant de constituer une collection de liens et de personnaliser cette collection.

Le but de la présente invention est de permettre à chaque utilisateur, relié à un serveur de pages par un réseau de type Internet ou intranet, de personnaliser un annuaire, de façon interactive, en associant des descripteurs personnels aux sites proposés.

L'invention vise à proposer un plus grand confort et une plus grande liberté à l'internaute, en lui permettant de gérer ses navigations successives, et de modifier et d'enrichir les contenus des listes qui lui sont proposées.

A cet effet, l'invention concerne selon son acception la plus générale un procédé pour la génération de pages d'annuaire numérique personnalisé destinées à être visualisées avec un programme de type navigateur, caractérisé en ce qu'il comporte une étape de personnalisation consistant :
- à enregistrer dans une mémoire temporaire d'un poste client un fichier numérique correspondant à une page de type HTML comprenant des liens hypertextes pour l'accès à d'autres pages, ainsi que des descripteurs associés à des pictogrammes et à procéder sur le poste client à l'affichage de ladite page,
- à enregistrer dans une mémoire temporaire du poste client au moins un fichier de personnalisation comprenant un identifiant d'un lien et au moins un descripteur de personnalisation sélectionné par l'utilisateur,
- à transmettre le contenu de ladite mémoire temporaire au poste serveur,
- à enregistrer dans la mémoire du serveur les données du fichier de personnalisation en liaison avec l'identifiant de l'utilisateur et l'identifiant du lien considéré.

Selon un mode de réalisation préféré, on enregistre dans une mémoire du serveur une première base d'utilisateurs comprenant pour chaque utilisateur un identifiant unique et au moins un descripteur de l'utilisateur associé, une deuxième base de sites comprenant pour chaque site un identifiant unique et une adresse, une troisième table de catégories de sites comprenant pour chaque catégorie un identifiant unique et une pluralité d'identifiants de site, et une quatrième base de descripteurs comprenant un identifiant unique pour chaque descripteur, et une pluralité d'identifiants de sites et d'identifiants d'utilisateurs, une requête provenant d'un poste client comprenant un identifiant de catégorie et l'identifiant de l'utilisateur, et provoquant la génération d'un fichier comprenant les identifiants des sites associés à l'identifiant de catégorie transmis par le poste client, et pour chacun desdits identifiants de site l'identifiant de catégorie correspondant à l'identifiant de site et à l'identifiant de l'utilisateur considéré.

Avantageusement, la sélection du descripteur par l'utilisateur est réalisée par la désignation de l'un des pictogrammes affichés dans la page d'annuaire, l'enregistrement de l'identité du descripteur du pictogramme affiché, par la désignation du site et la transmission par le poste client au poste serveur d'un fichier numérique comportant des couples formés d'au moins un descripteur de catégorie et d'un identifiant de site.

Selon une variante, les moyens d'affichage de la page comporte un filtre procédant à une sélection des identifiants des sites à afficher en fonction de la valeur du descripteur personnel associé.

Selon une autre variante, le procédé comporte une étape de sélection des sites à supprimer consistant à sélectionner un pictogramme de suppression, à sélectionner un ou plusieurs identifiants de sites, et à affecter au descripteur correspondant à chacun des sites sélectionné une valeur prédéfinie, puis à transmettre ces informations au serveur, pour l'enregistrement dans la base des descripteurs ladite valeur en relation avec lesdits sites à supprimer.

Ces sites ne sont en fait supprimés que de la liste affichée. Ils peuvent être réactivés par une opération ultérieure.

Avantageusement, le procédé comporte une étape d'addition de sites à une catégorie, consistant à sélectionner un identifiant de site, et à lui affecter une valeur correspondant à une catégorie existante, puis à transmettre ladite information au serveur et à enregistrer dans la base de catégorie l'identifiant du site sélectionné.

Cette opération pourra être réalisée par une action sur un pictogramme « copier » associé à un lien vers une application réalisant les opérations considérées et désignant la destination (catégorie). Elle permet également d'ajouter un site qui n'est pas dans la base et de l'intégrer à une catégorie au moyen d'un formulaire à remplir.

Selon une autre variante, le procédé comporte l'enregistrement sur le serveur de nouvelles catégories de sites spécifique à un utilisateur ou à une communauté d'utilisateurs.

La présente invention sera mieux comprise à la lecture de la description d'un exemple non limitatif de réalisation qui suit, se référant aux dessins annexés où :

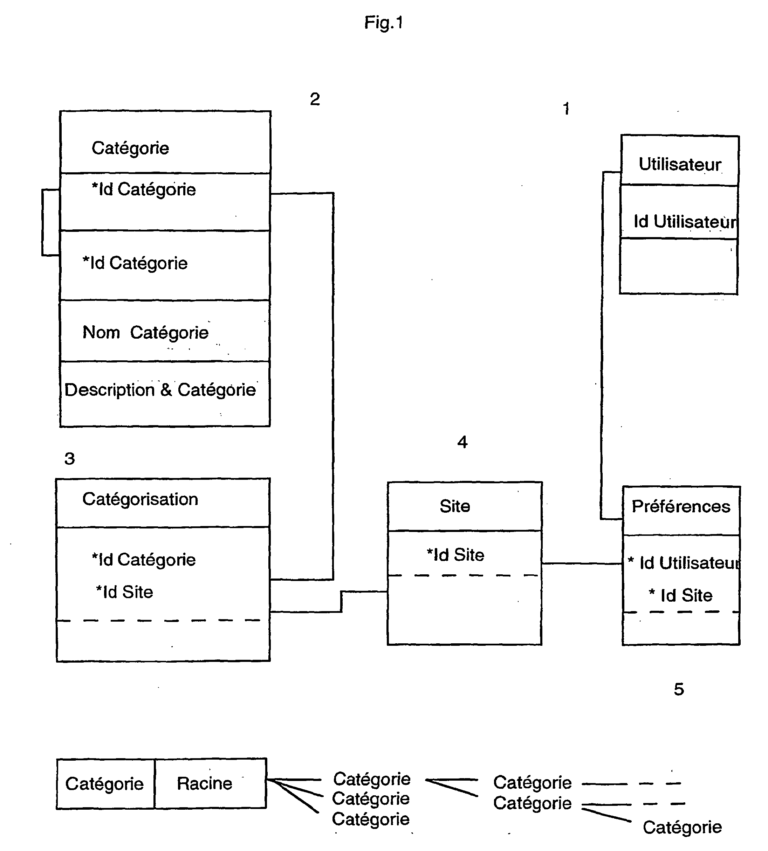

- la figure 1 représente l'architecture du serveur.
- la figure 2 représente une vue de l'affichage généré par le procédé selon l'invention ;

Le serveur comprend un ensemble de tables :
- une table (1) « utilisateurs » dans laquelle sont enregistrés, pour chaque utilisateur, un identifiant unique IDᵤₜ, ainsi que des données personnelles à l'utilisateur ;
- une table (2) « catégories » dans laquelle sont enregistrées, pour chaque catégorie ou famille de sites, un identifiant Id_{cat} unique, ainsi qu'une désignation textuelle
ou graphique de la catégorie, une description et optionnellement un identifiant unique ID_{cm} correspondant à une classe de catégories regroupant plusieurs catégories.
- une table (3) contenant les identifiants de catégories et de sites appartenant à cette catégorie ;
- une table (4) « sites » contenant des identifiants uniques de sites IDₛᵢₜₑ et l'adresse IP du site, ainsi que, optionnellement, un descriptif du site ;
- une table (5) « préférences » dans laquelle sont enregistrées, pour chaque utilisateur et chaque site, un indicateur de préférence.

Cet indicateur de préférence est modifié par l'utilisateur à partir d'un poste client. L'internaute sélectionne une catégorie de sites par l'envoi d'une requête construite par la sélection d'un lien hypertexte visualisé sur l'écran de l'ordinateur, et l'enregistrement d'un identifiant associé à ce lien hypertexte, et l'envoie au poste serveur, sous la forme d'un fichier numérique contenant ledit identifiant de catégorie sélectionnée ainsi qu'un identifiant de l'utilisateur.

En retour, le serveur adresse un fichier contenant les informations associées à l'identifiant de catégorie et la liste des sites associés à cet identifiant de catégorie, ainsi que les indicateurs de préférence, lorsqu'il en existe.

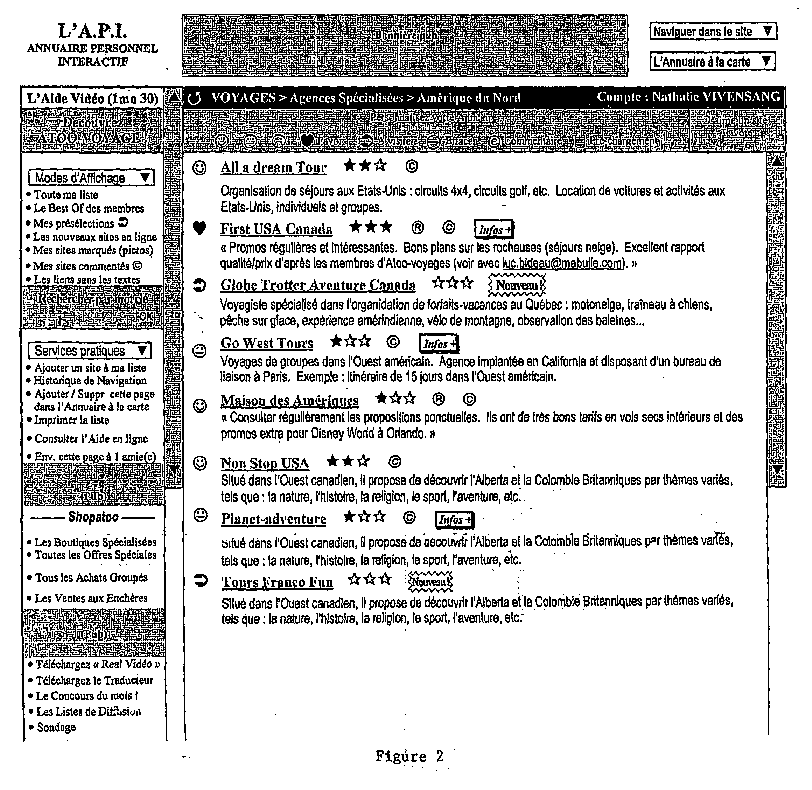

Ce fichier est exploité par un navigateur pour produire un écran tel que représenté en figure 2.

L'utilisateur dispose d'une collection de pictogramme qu'il peut sélectionner pour annoter un site apparaissant dans la liste. Le pictogramme « à visiter » permet de présélectionner des sites que l'internaute souhaite visiter ultérieurement.

Le pictogramme « effacer » permet d'effacer un pictogramme apparaissant en relation avec un site listé, par superposition avec le pictogramme existant.

Le pictogramme « préchargement » permet de commander le pré-chargement du site. Il est associé à une procédure informatique commandant l'apparition d'une icône cliquable permettant d'ouvrir une fenêtre avec la page HTML chargée en mémoire cache. Par ailleurs, la procédure informatique provoque une modification de l'apparence du pictogramme en fonction de l'état du préchargement (en cours de chargement dans la mémoire cache, préchargé et visualisable immédiatement, ou déjà visualisé au cours de la session).

Les pictogrammes « smileys » permettent d'annoter l'intérêt d'un site.

Le pictogramme « commentaire » permet d'enregistrer un commentaire en relation avec un site. Cette fonction permet également de remplacer le résumé proposé par la table « site » par un commentaire personnel, enregistré dans la table « préférences ».

Les sites ainsi commentés sont présentés en relation avec un pictogramme cliquable, permettant d'afficher alternativement le commentaire personnel ou le résumé public. Optionnellement, l'enregistrement du commentaire personnel peut être complété par l'enregistrement d'une information pour la visualisation du seul commentaire personnel, ou du commentaire personnel accompagné du résumé public, ou d'une icône cliquable permettant de « basculer » entre les deux types de commentaires.

Le pictogramme « vote » permet d'associer au site un indicateur commun à plusieurs utilisateurs, le faisant apparaître dans les « best of » ou sites préférés d'une communauté d'internautes.

L'affichage présente par ailleurs des fonctions additionnelles telles que :
- une liste de raccourcis pour accéder directement aux pages préférées,
- un historique mémorisant et affichant la liste des sites récemment visités
- une fonction d'ajout d'un site, issu d'autres listes. Cette fonction peut consister à ajouter un site créé par l'internaute.

Une autre fonction est la gestion personnalisée de favoris. Cette fonction consiste à enregistrer dans une table les identifiants des sites présélectionnés par l'utilisateur, et de construire dans la page d'accueil une liste des sites présélectionnés, pour permettre un accès rapide à ces sites par un lien hypertexte. La désignation du favori se fait par l'attribution d'un pictogramme, ce qui, en plus de lui donner une marque visible en marge du site désigné, intègre automatiquement celui-ci dans la liste de favoris.

Une autre fonction consiste à enregistrer dans une table de catégorie une catégorie personnelle, dans laquelle l'utilisateur peut enregistrer des sites sélectionnés ou créés constituant un annuaire correspondant à ces centres d'intérêts personnels.

Une autre fonction consiste à affecter à des sites sélectionnés une icône « à visiter » permettant de filtrer l'affichage de la page d'annuaire, pour ne visualiser optionnellement que les sites comportant cet indicateur dans la table correspondante associée à l'utilisateur.

Eventuellement, la page HTML comporte une bibliothèque de pictogramme sans affectation, permettant de modifier la forme graphique des pictogrammes standard, ou de créer des fonctions additionnelles. Cette bibliothèque peut être visualisée dans une fenêtre additionnelle ou dans une partie de la fenêtre principale.

L'invention est décrite dans ce qui précède à titre d'exemple non limitatif.

## Revendications

1. Procédé pour la génération de pages d'annuaire numérique personnalisé destinées à être visualisées avec un programme de type navigateur, comportant une première étape consistant
à enregistrer dans une mémoire temporaire d'un poste client un fichier numérique correspondant à une page de type HTML comprenant des liens hypertextes pour l'accès à d'autres pages, ainsi que des descripteurs associés à des pictogrammes et à procéder sur le poste client à l'affichage de ladite page,
**caractérisé en ce qu'**il comporte une étape de personnalisation consistant :
à enregistrer dans une mémoire temporaire du poste client au moins un fichier de personnalisation comprenant un identifiant d'un lien et au moins un descripteur de personnalisation sélectionné par l'utilisateur,
à transmettre le contenu de ladite mémoire temporaire au poste serveur,
à enregistrer dans la mémoire du serveur les données du fichier de personnalisation en liaison avec l'identifiant de l'utilisateur et l'identifiant du lien considéré.

2. Procédé pour la génération de pages d'annuaire numérique personnalisé selon la revendication 1 **caractérisé en ce que** l'on enregistre dans une mémoire du serveur une première base d'utilisateurs (1) comprenant pour chaque utilisateur un identifiant unique et au moins un descripteur de l'utilisateur associé, une deuxième base de sites (2) comprenant pour chaque site un identifiant unique et une adresse, une troisième table de catégories de sites (3) comprenant pour chaque catégorie un identifiant unique et une pluralité d'identifiants de site, et une quatrième base de descripteurs (4) comprenant un identifiant unique pour chaque descripteur, et une pluralité d'identifiants de sites et d'identifiants d'utilisateurs, une requête provenant d'un poste client comprenant un identifiant de catégorie et l'identifiant de l'utilisateur, et provoquant la génération d'un fichier comprenant les identifiants des sites associés à l'identifiant de catégorie transmis par le poste client, et pour chacun desdits identifiants de site l'identifiant de catégorie correspondant à l'identifiant de site et à l'identifiant de l'utilisateur considéré.

3. Procédé pour la génération de pages d'annuaire numérique personnalisé selon la revendication 1 ou 2 **caractérisé en ce que** la sélection du descripteur par l'utilisateur est réalisée par la désignation de l'un des pictogrammes affichés dans la page d'annuaire, l'enregistrement de l'identité du descripteur du pictogramme affiché, par la désignation du site et la transmission par le poste client au poste serveur d'un fichier numérique comportant des couples formé d'au moins un descripteur de catégorie et d'un identifiant de site.

4. Procédé pour la génération de pages d'annuaire numérique personnalisé selon l'une quelconque des revendications précédentes **caractérisé en ce que** les moyens d'affichage de la page comporte un filtre procédant à une sélection des identifiants des sites à afficher en fonction de la valeur du descripteur personnel associé.

5. Procédé pour la génération de pages d'annuaire numérique personnalisé selon l'une quelconque des revendications précédentes **caractérisé en ce qu'**il comporte une étape de sélection des sites à supprimer consistant à sélectionner un pictogramme de suppression, à sélectionner un ou plusieurs identifiants de sites, et à affecter au descripteur correspondant à chacun des sites sélectionné une valeur prédéfinie, puis à transmettre ces informations au serveur, pour l'enregistrement dans la base des descripteurs (4) ladite valeur en relation avec lesdits sites à supprimer.

6. Procédé pour la génération de pages d'annuaire numérique personnalisé selon l'une quelconque des revendications précédentes **caractérisé en ce qu'**il comporte une étape d'addition de sites à une catégorie, consistant à sélectionner un identifiant de site, et à lui affecter une valeur correspondant à une catégorie existante, puis à transmettre ladite information au serveur et à enregistrer dans la base de catégorie (3) l'identifiant du site sélectionné.

7. Procédé pour la génération de pages d'annuaire numérique personnalisé selon l'une quelconque des revendications précédentes **caractérisé en ce qu'**il comporte une étape d'addition d'une catégorie additionnelle.

8. Procédé pour la génération de pages d'annuaire numérique personnalisé selon l'une quelconque des revendications précédentes **caractérisé en ce qu'**il comporte une étape d'enregistrement de commentaires personnels et de visualisation d'une icône reliée aux sites comportant un commentaire personnel, ladite icône étant associée à un lien pour le basculement entre la visualisation du commentaire personnel ou du résumé public.

9. Procédé pour la génération de pages d'annuaire numérique personnalisé selon l'une quelconque des revendications précédentes **caractérisé en ce qu'**il comporte une étape d'enregistrement d'un indicateur de « préchargement » permettant de commander le pré-chargement du site associé, et une étape de visualisation commandant l'apparition d'une icône cliquable permettant d'ouvrir une fenêtre avec la page HTML chargée en mémoire cache et provoquant une modification de l'apparence du pictogramme en fonction de l'état du préchargement (en cours de chargement dans la mémoire cache, préchargé et visualisable immédiatement, ou déjà visualisé au cours de la session).

## Patentansprüche

1. Verfahren zur Erzeugung von Seiten eines persönlichen numerischen Namensverzeichnis, das zur Anzeige mit einem Programm, Typ Navigator, bestimmt ist, das eine erste Stufe umfasst, die darin besteht,
in einem temporären Speicher einer Client-Station eine numerische Datei zu speichern, die einer HTML-Seite entspricht, die Hypertext-Links für den Zugriff auf andere Seiten umfasst sowie Deskriptoren, die mit Piktogrammen verbunden sind und auf der Client-Station die Anzeige der besagten Seite vorzunehmen,
**dadurch gekennzeichnet, dass** es eine Stufe der Personalisierung umfasst, die aus Folgendem besteht:
Speicherung in einem temporären Speicher der Client-Station von mindestens einer Personalisierungsdatei, die eine Identifizierung eines Links und mindestens einen Personalisierungsdeskriptor, der von dem Benutzer ausgewählt wird, umfasst,
Übertragung des Inhalts des besagten temporären Speichers an die Server-Station,
Speicherung in dem Speicher des Servers der Daten der Personalisierungsdatei in Verbindung mit der Benutzeridentifizierung und der Identifizierung des entsprechenden Links.

2. Verfahren zur Erzeugung von Seiten eines persönlichen numerischen Namensverzeichnis gemäß dem Anspruch 1, **dadurch gekennzeichnet, dass** man in einem Speicher des Servers eine erste Benutzerdatenbank (1) speichert, die für jeden Benutzer eine einzige Benutzeridentifizierung und mindestens einen Deskriptor des verbundenen Benutzers umfasst, eine zweite Websitesdatenbank (2), die für jede Seite eine Identifizierung und eine Adresse umfasst, eine dritte Tabelle mit den Kategorien der Websites (3), die für jede Kategorie eine einzige Identifizierung und eine Vielzahl von Websitesidentifizierungen umfasst und eine vierte Deskriptorendatenbank (4), die eine Identifizierung für jeden Deskriptor umfasst und eine Vielzahl von Websitesidentifizierungen und Benutzeridentifizierungen, eine Anfrage, die von einer Client-Station kommt, die eine Kategorienidentifizierung und die Benutzeridentifizierung umfasst und die Erzeugung einer Datei bewirkt, die die Identifizierungen der verbundenen Websites umfasst, die Kategorienbenutzeridentifizierung, die von der Client-Station übertragen wird und für jede der besagten Websitesidentifizierungen die Kategorienidentifizierung, die der Websitesidentifizierung und der Benutzeridentifizierung des betroffenen Benutzers entspricht.

3. Verfahren zur Erzeugung von Seiten eines persönlichen numerischen Namensverzeichnis gemäß dem Anspruch 1 oder 2, **dadurch gekennzeichnet, dass** die Auswahl des Deskriptors durch den Benutzer durch die Bezeichnung eines der angezeigten Piktogramme erfolgt, die auf der Seite des Namensverzeichnis angezeigt werden, die Speicherung der Identifizierung des Deskriptors des angezeigten Piktogramms, durch die Websitebezeichnung und die Übertragung durch die Client-Station an die Server-Station der numerischen Datei, die Paare umfasst, die aus mindestens einem Kategoriendeskriptor und einer Websitesidentifizierung bestehen.

4. Verfahren zur Erzeugung von Seiten eines persönlichen numerischen Namensverzeichnis gemäß einem der vorherigen Ansprüche, **dadurch gekennzeichnet, dass** das Anzeigegerät der Seite einen Filter umfasst, der eine Auswahl der Identifizierungen der anzuzeigenden Websites vornimmt und die Funktion des Wertes des angeschlossenen persönlichen Deskriptors.

5. Verfahren zur Erzeugung von Seiten eines persönlichen numerischen Namensverzeichnis gemäß einem der vorherigen Ansprüche, **dadurch gekennzeichnet, dass** es eine Stufe zur Auswahl der zu löschenden Websites umfasst, die darin besteht, ein Löschpiktogramm auszuwählen, ein oder mehrere Websitesidentifizierungen auszuwählen und dem Deskriptor, der jedes ausgewählten Websites entspricht, einen vorher festgelegten Wert zuzuordnen und dann diese Informationen an den Server zu übertragen, zur Speicherung des besagten Wertes in Verbindung mit den besagten zu löschenden Websites in der Datenbank der Deskriptoren (4).

6. Verfahren zur Erzeugung von Seiten eines persönlichen numerischen Namensverzeichnis gemäß einem der vorherigen Ansprüche, **dadurch gekennzeichnet, dass** es eine Stufe zum Hinzufügen von Websites zu einer Kategorie umfasst, die darin besteht, eine Websitesidentifizierung auszuwählen und ihr einen Wert zuzuordnen, der einer vorhandenen Kategorie entspricht und dann diese Information an den Server zu übertragen und die Benutzeridentifizierung des ausgewählten Website in der Kategoriedatenbank (3) zu speichern.

7. Verfahren zur Erzeugung von Seiten eines persönlichen numerischen Namensverzeichnis gemäß einem der vorherigen Ansprüche, **dadurch gekennzeichnet, dass** es eine Stufe zum Hinzufügen einer zusätzlichen Kategorie umfasst.

8. Verfahren zur Erzeugung von Seiten eines persönlichen numerischen Namensverzeichnis gemäß einem der vorherigen Ansprüche, **dadurch gekennzeichnet, dass** es eine Stufe zur Speicherung von persönlichen Kommentaren und zur Anzeige eines Ikons umfasst, das mit den Websites verbunden ist, die einen persönlichen Kommentar enthalten, wobei das besagte Ikon mit einem Link verbunden ist, zur Umschaltung zwischen der Anzeige des persönlichen Kommentars und der öffentlichen Zusammenfassung.

9. Verfahren zur Erzeugung von Seiten eines persönlichen numerischen Namensverzeichnis gemäß einem der vorherigen Ansprüche, **dadurch gekennzeichnet, dass** es eine Stufe zur Speicherung einer Anzeige "Vorladung" umfasst, die ermöglicht, die Vorladung des verbundenen Websites anzufordern und eine Anzeigestufe, die das Erscheinen eines Ikons, das man anklicken kann, verlangt, welches das Öffnen eines Fensters mit der HTML-Seite ermöglicht, die im Cache-Speicher geladen wird und eine Änderung der Ansicht des Piktogramms je nach Zustand der Vorladung (während des Ladevorgangs in den Cache-Speicher, vorgeladen und sofort anzeigbar oder bereits während der Sitzung angezeigt) bewirkt.

## Claims

1. A process for generating personalized digital directory pages for display with a navigator program, comprising a first step consisting of :
- recording in a temporary memory of a client station a digital file corresponding to an HTML page comprising hypertext links for access to other pages as well as descriptors associated with pictograms , and proceeding to the display of said page on the client station
**characterized in that** said process comprises a personalizing step consisting of :
- recording in a temporary memory of the client station at least one personalization file comprising a link identifier and at least one personalization descriptor selected by the user
- Transmitting the content of said temporary memory to the server
- Recording in the server memory, the personalization file data linked with user identifier and the link identifier in question.

2. A process for generating personalized digital directory pages according to claim 1, **characterized in that** there is recorded in the server memory a first database of users (1) comprising for each user a unique identifier and at least one associated user descriptor, a second database of site (2) comprising for each site a unique identifier and an address, a third database of site categories (3) comprising for each category a unique identifier and a plurality of site identifiers, and a fourth database of descriptors (4) comprising a unique identifier for each descriptor and a plurality of site identifiers and user identifiers, a request from the client station comprising a category identifier and the user identifier, and causing the generation of a file comprising the site identifiers associated with the category identifier transmitted by the client station, and for each of said site identifiers the category identifier corresponding to said site identifier and said user identifier.

3. A process for generating personalized digital directory pages according to claim 1 or 2 **characterized in that** the selection of the descriptor by the user is performed by designating one of the pictograms displayed on the directory page, recording the identity of the displayed pictogram descriptor, by designating the site and the transmission by the client station to the server of a digital file comprising pairs formed by at least one category descriptor and a site identifier.

4. A process for generating personalized digital directory pages according to any of the preceding claims **characterized in that** the display comprises a filter enabling selection of the identifiers of the sites to be displayed as a function of associated personal descriptor value.

5. A process for generating personalized digital directory pages according to any of the preceding claims **characterized in that** the process further comprises selecting sites to be deleted consisting in selecting a deletion pictogram, selecting one or more site identifiers, assigning a predefined value to a descriptor corresponding to each of the selected sites, and transmitting information to the server for recording in the descriptor database (4) of the value in relation with the sites to be deleted.

6. A process for generating personalized digital directory pages according to any of the preceding claims **characterized in that**, it comprises the step of adding sites to a category including selecting a site identifier and assigning a value corresponding to an existing category, and transmitting the information to the server and recording in the category database (3) the identifier of the selected site.

7. A process for generating personalized digital directory pages according to any of the preceding claims **characterized in that** it comprises an adding step of an additional category.

8. A process for generating personalized digital directory pages according to any of the preceding claims **characterized in that** it comprises the recording of personal comments and displaying an icon linked to sites bearing a personal comment, the icon being associated with a link for switching between the display of the personal comment or the public summary.

9. A process for generating personalized digital directory pages according to any of the preceding claims **characterized in that** it comprises a recording step of a « preloading » indicator enabling command of the preloading of the associated site, and a displaying step of commanding the appearance of a clickable icon for opening a window with the HTML page loaded in cache memory and causing modification of the appearance of the pictogram as a function of the preloading status (in the process of loading in the cache memory, preloaded and immediately displayable, or already displayed during the session).
